# EUROPEAN PATENT SPECIFICATION

(11) **EP 2 532 406 B1**
(45) Date of publication and mention of the grant of the patent: **06.11.2019**
(21) Application number: 11739674.7
(22) Date of filing: 27.01.2011
(51) Int. Cl.: B01D 39/14, B01D 39/16, B01D 46/24, B01D 39/08, B01D 46/52

(54) **FILTER ELEMENT, FILTER DEVICE, AND METHOD FOR MANUFACTURING FILTER ELEMENT**
FILTERELEMENT, FILTERVORRICHTUNG UND HERSTELLUNGSVERFAHREN FÜR DAS FILTERELEMENT
ELÉMENT DE FILTRE, DISPOSITIF DE FILTRE ET PROCÉDÉ DE FABRICATION D'UN ÉLÉMENT DE FILTRE

(30) Priority: 02.02.2010 JP 2010021465
(43) Date of publication of application: 12.12.2012
(73) Proprietor: CKD Corporation, Komaki-shi Aichi-ken 485-8551 (JP); Asahi Fiber Industry Co., Ltd, Inazawa-shi, Aichi 492-8424 (JP)
(72) Inventor: YOGO, Toshifumi, Komaki-shi Aichi 485-8551 (JP); YOKOMAKURA, Tasuku, Komaki-shi Aichi 485-8551 (JP); ASAI, Koji, Inazawa-shi Aichi 492-8424 (JP)
(74) Representative: Kransell & Wennborg KB
(86) International application number: PCT/JP2011/051620
(87) International publication number: WO 2011/096325

(56) References cited:
- EP-A1- 2 500 075
- WO-A2-2007/063504
- JP-B- 46 040 143
- JP-U- H 033 413
- JP-U- H0 639 113
- JP-U- H0 672 619
- JP-U- H0 672 619
- JP-U- 50 013 277
- JP-U- 57 039 621
- JP-U- 60 031 323
- JP-U- H01 170 417
- JP-U- H04 131 412
- US-A1- 2003 006 186

## Description

### TECHNICAL FIELD

The present invention relates to a filter element for use in an oil mist filter, which captures oil mist contained in gas, a filter device, which includes the filter element, and a method for manufacturing the filter element.

### BACKGROUND ART

Fluid pressure actuated equipment such as an air cylinder is actuated by an air compressed by a compressor. The compressed air contains liquid foreign matter such as water and oil mist and solid foreign matter such as dust. If the compressed air is supplied as it is to the fluid pressure actuated equipment without being filtered, various troubles may occur possibly. Therefore, in order to separate the foreign matter, it is necessary to filter the compressed air by using a filter device before it is supplied to the fluid pressure actuated equipment. This type of filter device includes a cylindrical filter. As the compressed air passes from the inside to the outside of the filter, the liquid and the foreign matter contained in the compressed air are captured by the filter.

Patent Document 1 discloses a filter including a cylindrical filter element and a cap attached to each of the two axial ends of the filter element. The filter element includes a cylindrical reinforcing cylinder made of stainless steel, a glass fiber-made filtration material wound around the reinforcing cylinder, and a cylindrical jacket covering the filtration material. To manufacture the filter element, first a plate material having a predetermined size is cut out of a stainless steel sheet material and rolled up cylindrically. Next, one end of the plate material is welded to the other end thereof to form a reinforcing cylinder. Subsequently, a filtration material is wound around the reinforcing cylinder by a predetermined number of turns. Then, the filtration material is covered by a jacket by using a dedicated device or a jig such as a guide. In such a manner, the filter element is finished to be made.

Patent Document 2 discloses a filter element including a non-woven fabric made of thermal welding fiber and a filter paper made of glass fiber. To manufacture the filter element, first, polymeric non-woven fabric is wound around a coil frame to a predetermined thickness. Next, a glass fiber fabric is wound around the polymeric non-woven fabric by at least one turn and cut. Further, the polymeric non-woven fabric is wound around the glass fiber fabric to a predetermined thickness and cut. The polymeric non-woven fabric and the glass fiber fabric are thermally welded to each other in this condition, to form a tubular body. Then, both ends of the tubular body are cut off. In such a manner, the filter element having a predetermined length is finished

### PRIOR ART DOCUMENT

Patent Document US 2003/006186 discloses prequalifying sections of a filter medium located either at radially outer layers of the filter medium or at radially inner layers of the filter medium, but not in both at the same time.

Patent Document EP 2 500 075 discloses a tubular filter suitable for capturing and removing, in a continuous production line, solid content and oil content in a large volume of liquid.
Patent Document 1: Japanese Laid-Open Patent Publication No. 7-114905.
Patent Document 2: Japanese Laid-Open Patent Publication No. 2005-265504.

### SUMMARY OF THE INVENTION

### Problems that the Invention is to Solve

According to the method described in Patent Document 1, a plate material, which is formed into the reinforcing cylinder, a filtration material, and a jacket are previously cut in such a manner that they may match the axial length and diameter of the filter element. In this case, if the sizes of the plate material and the jacket have errors, it could be difficult to capture foreign matter at the axial ends of the filter element. This leads to the necessity of accurately managing the sizes of those materials. Further, the step of welding for forming the reinforcing cylinder complicates manufacturing of the filter element. Those factors increase the manufacturing costs. Moreover, the filtration material made of the glass fiber could come in contact with the metallic reinforcement cylinder directly and be damaged. To prevent it, the non-woven fabric configured to protect the filtration material may be placed between the filtration material and the reinforcing cylinder. However, in this case, the number of the components increases, thereby increasing the number of steps of manufacturing the filter element.

According to the method described in Patent Document 2, the filter element includes the non-woven fabric and the filter paper made of glass fiber, so that its strength could be insufficient. To ensure proper strength of the filter element, it may be considered to increase the thickness of the layer of the non-woven fabric by increasing the number of turns of the non- woven fabric. However, if the non-woven fabric layer becomes thick, compressed air cannot easily pass through the filter element. Accordingly, the pressure of the compressed air drops significantly, thereby reducing the flow rate of compressed air. Further, if the pressure of the compressed air lowers, the flow of the compressed air could be blocked by the filter element. Moreover, if the filter element described in Patent Document 2 is used to capture oil mist, the captured oil mist continues to be accumulated on the non-woven fabric through aggregation without precipitating, so that the flow of compressed air could be blocked by the filter element. In this case, since a drop in pressure of the compressed air becomes large, the flow rate of the compressed air is reduced. Further, if the pressure of the compressed air lowers, the flow of the compressed air could be blocked by the filter element.

It is an objective of the present invention to provide a filter element, filter device, and method for manufacturing the filter element configured to facilitate manufacture and suppress a rise in manufacturing costs.

### Means for Solving the Problems

To achieve the foregoing objective and in accordance with a first aspect of the present invention, a filter element for capturing oil mist contained in gas is provided. The filter element includes a plastic mesh-like member and a filtration material for capturing oil mist in the gas passing through the filter element. The filter element is formed in a tubular shape by spirally winding the mesh-like member and the filtration material.

In this configuration, the filter element is formed in a tubular shape by spirally winding the plastic mesh-like member and the filtration material. Therefore, the filter element can be manufactured easily. Further, since the mesh-like member is made of plastic, the filtration material is prevented from being damaged when it comes in contact with the mesh-like member. This eliminates the necessity of a member configured to prevent the filtration material from being damaged, thereby inhibiting a rise in manufacturing costs. Moreover, the mesh-like member serves to ensure proper strength of the filter element. Accordingly, it is unnecessary to wind the non-woven fabric thickly in order to ensure strength. This enables ensuring the proper strength of the filter element while inhibiting a gas flow from being blocked.

In the above described filter element, the mesh-like member is independently wound by at least one turn at a position radially inward of the filtration material.

In this configuration, the mesh-like member is independently wound by at least one turn at a position radially inward of the filtration material. Accordingly, at a position radially inward of the filter element, the mesh-like member serves to protect the filtration material and to stabilize the position of the filtration material. Further, since the mesh-like member is wound by at least one turn at a position radially inward of the filtration material, the proper strength of the filter element can be ensured easily.

In the above described filter element, the mesh-like member is independently wound by at least one turn at a position radially outward of the filtration material.

In this configuration, the mesh-like member is independently wound by at least one turn at a position radially outward of the filtration material. Accordingly, at a position radially outward of the filter element, the mesh-like member serves to protect the filtration material and to stabilize the position of the filtration material. Further, since the mesh-like member is wound by at least one turn at a position radially outward of the filtration material, the proper strength of the filter element can be ensured easily.

The above described filter element preferably includes a pre-filtration material, which has a coarser mesh than the filtration material and captures foreign matter in the gas, and the pre-filtration material is preferably located at a position radially inward of the filtration material.

In this configuration, when the gas passes from the inside to the outside of the filter element, foreign matter larger than oil mist is captured by the coarse-meshed pre-filtration material at a radially inner position, and oil mist is captured by the fine-meshed filtration material at a radially outer position. Therefore, the filtration material in the filter element is inhibited from being clogged.

In accordance with a second aspect of the present invention, a filter device is provided that includes a housing, which has a gas passage for discharging gas that has been introduced to the housing out of the housing and the above described filter element. The filter element is preferably located on the gas passage of the housing and captures oil mist contained in the gas.

In this configuration, the costs for manufacturing the filter device are inhibited from rising. Further, in the filter device, the gas flow is not blocked by the filter element, so that the gas can be introduced and discharged smoothly.

In accordance with a third aspect of the present invention, a method for manufacturing a plurality of filter elements is provided. The method includes: a step of rolling up a plastic mesh material and a filtering material located on the mesh material spirally together to form a tubular rolled-up member; and a step of cutting the rolled-up member for each axial length of the filter element to form a plurality of the filter elements from the rolled-up member.

According to this method, in the rolling-up step, the plastic mesh material and the filtering material are rolled up spirally together to form the tubular rolled-up member, and in the cutting-off step, the rolled-up member is cut to form a plurality of the filter elements.

Therefore, the plurality of filter elements can be manufactured easily. Further, it is unnecessary to cut the mesh material and the filtering material into predetermined sizes in advance, so that the sizes of the materials can be managed easily. As a result, a rise in manufacturing costs can be inhibited. Further, since the mesh material is made of plastic, the filtering material is inhibited from being damaged when it comes in contact with the mesh material. This eliminates the necessity of a member to prevent the filtering material from being damaged, thereby more enabling inhibiting a rise in manufacturing costs.

In the above described method, in the rolling-up step, after the mesh material is independently rolled up by at least one turn, the mesh material and the filtering material are rolled up together.

According to this method, in the rolling-up step, after the mesh material is independently rolled up by at least one turn, the filtering material is rolled up together with the mesh material. Accordingly, at a position radially inward of the rolled-up member, the mesh material serves to protect the filtering material and to stabilize the position of the filtering material. That is, because the mesh material is independently wound by at least one turn at a position radially inward of the filtering material, the proper strength of the filter element can be ensured easily. Further, at a position radially inward of the filter element, the mesh-like member serves to protect the filtration material and to stabilize the position of the filtration material.

In the above described method, in the rolling-up step, after the mesh material and the filtering material are rolled up together, the mesh material is independently rolled up by at least one turn.

According to this method, in the rolling-up step, after the mesh material and the filtering material are rolled up together, the mesh material is rolled up independently by at least one turn. Accordingly, at a position radially outward of the rolled-up member, the mesh material serves to protect the filtering material and to stabilize the position of the filtering material. That is, because the mesh material is independently wound by at least one turn at a position radially outward of the filtering material, the proper strength of the filter element can be ensured easily.

In the above method, in the rolling-up step, the mesh material that overlap with each other in the radial direction of the filter element are welded to each other.

According to this method, the mesh material is made of plastic, so that portions of the mesh material that overlap with each other in the radial direction of the filter element can be melted and bonded easily. Therefore, the rolled up mesh material and filtering material can be easily kept in a cylindrical shape. Further, it eliminates the necessity of a component or an adhesive agent to keep the rolled up mesh material and filtering material in a cylindrical shape, thereby enabling reduction in the manufacturing costs.

In accordance with a fourth aspect of the present invention, the method for manufacturing the filter element includes: a step of arranging a filtering material on a plastic mesh material and then arranging the pre-filtering material on the filtering material; and a step of rolling up the filtering material and the pre-filtering material together with the mesh material.

According to this method, *even* in the case of forming the filter element having a pre-filtration material, the rolled-up member can be formed each time the rolling-up step is performed. Then, by cutting the rolled-up member, a plurality of the filter elements can be manufactured easily. In the thus formed filter element, when gas passes from its inside to its outside, foreign matter larger than oil mist is captured by the coarse-meshed pre-filtration material on a radially inner position and oil mist is captured by the fine-meshed filtration material on a radially outer position. Therefore, the filtration material in the filter element is inhibited from being clogged.

In accordance with a fifth aspect of the present invention, the method for manufacturing the filter element includes: a step of arranging the pre-filtering material and the filtering material in that order on a plastic mesh material in a roll-up direction of the mesh material; and a step of rolling up the filtering material and the pre-filtering material together with the mesh material.

This method can provide almost the same operation and advantages as those by the invention according to the fourth aspect.

### BRIEF DESCRIPTION OF THE DRAWINGS

Fig. 1 is a cross-sectional view showing a filter device including a filter element according to one embodiment of the present invention;
Fig. 2(a) is a longitudinal cross-sectional view of the filter element;
Fig. 2(b) is a lateral cross-sectional view of the filter element;
Figs. 3(a) and 3(b) are explanatory perspective views of a method for manufacturing the filter element;
Fig. 4(a) is a longitudinal cross-sectional view of a filter element of another embodiment;
Fig. 4(b) is an explanatory perspective view of a method for manufacturing the filter element of Fig. 4(a);
Fig. 4(c) is a longitudinal cross-sectional view of a filter element of a further embodiment; and
Fig. 4(d) is an explanatory perspective view of a method for manufacturing the filter element of Fig. 4(c).

### MODES FOR CARRYING OUT THE INVENTION

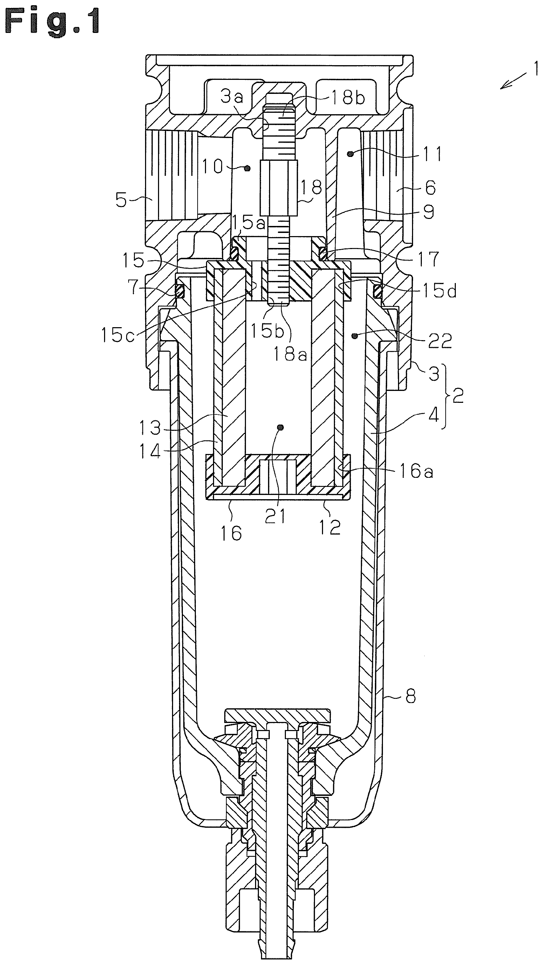

The following will describe one embodiment of the present invention with reference to Figs.1 to 3(c).

As shown in Fig. 1, a housing 2 of a filter device 1 includes a body 3, of which the lower surface is open, and a bowl 4, of which the upper surface is open. The body 3 and the bowl 4 are assembled in such a manner that their respective openings abut against each other. The body 3 has an inlet port 5. On the opposite side of the inlet port 5, the body 3 has an outlet port 6. To the inlet port 5, an air supply source (not shown) is connected. To the outlet port 6, a fluid pressure device (not shown) is connected. Through the inlet port 5, compressed air as gas is introduced to the filter device 1. The compressed air is discharged from the filter device 1 through the outlet port 6.

An upper end of the bowl 4 is fit in the lower portion of the body 3. The bowl 4 is formed into the shape of a cylinder, of which the diameter decreases toward the lower end. A first O-ring 7 is fitted the outer circumferential surface of the upper end of the bowl 4. The first O-ring 7 serves to keep air tightness between the body 3 and the bowl 4. The body 3 has a bowl guard 8 fitted therein to cover the outer circumferential surface of the bowl 4. The bowl guard 8 is formed roughly into the shape of a cylinder having a bottom and an open upper end.

From the inner top portion of the body 3, a substantially tubular partition wall 9 extends downward. The partition wall 9 is open toward the inside of the bowl 4 located below. The side wall of the partition wall 9 communicates with the inlet port 5. The internal space of the partition wall 9 forms an introduction passage 10, which permits the inlet port 5 and the inside of the bowl 4 to communicate with each other. The partition wall 9 is located away from the outlet port 6 to create some space between itself and the outlet port 6. The space between the partition wall 9 and the outlet port 6 forms a discharge passage 11, which permits the inside of the bowl 4 and the outlet port 6 to communicate with each other.

The partition wall 9 has an oil mist filter 12 attached to its lower end. The oil mist filter 12 includes a cylindrical filter element 13, a cylindrical covering member 14 fitted about the filter element 13, a substantially disk-shaped first cap 15 attached to the upper end of the filter element 13, and a second cap 16 attached to the lower end of the filter element 13. Fig. 1 shows the filter element 13 in a simplified manner.

Compressed air flows from the inside of the filter element 13 through the filter element 13 to the outside thereof. In this case, the filter element 13 captures liquid foreign matter such as oil mist and solid foreign matter such as dust contained in the compressed air. The covering member 14 is formed of plastic foam.

From the upper surface of the first cap 15, an annular fit-in portion 15a projects upward. The fit-in portion 15a is fitted to the lower end of the partition wall 9. Accordingly, the first cap 15 is connected to the partition wall 9. Further, the fit-in portion 15a has a second O-ring 17 attached to its outer circumferential surface. The second O-ring 17 serves to keep air tightness between the partition wall 9 and the first cap 15.

At the center of the fit-in portion 15a, that is, at the center of the first cap 15, an internal thread hole 15b is formed to extend in the axial direction of the first cap 15. Inside the partition wall 9, a support rod 18 is located. The support rod 18 has an external thread portion 18a formed on its lower part. The lower part of the support rod 18 is threaded into the internal thread hole 15b in the first cap 15. The support rod 18 has an external thread portion 18b formed on its upper portion. In the inner top portion of the body 3, that is, in a site positioned at the inside of the partition wall 9, an internal thread hole 3a is formed. The upper portion of the support rod 18 is threaded into the internal thread hole 3a in the body 3. The support rod 18 supports the first cap 15 to the body 3.

The first cap 15 has a communication hole 15c, which permits the inside of the partition wall 9 and the inside of the oil mist filter 12 to communicate with each other. The communication hole 15c is located inside the fit-in portion 15a and outside the internal thread hole 15b. The first cap 15 has an annular first attachment groove 15d, which opens downward. The inner diameter and the outer diameter of the first attachment groove 15d correspond to the inner diameter and the outer diameter of a cylinder body, which is formed by the filter element 13 and the covering member 14. In the first attachment groove 15d, the upper end of the filter element 13 is inserted. The upper end of the filter element 13 is fixed by adhesion to the inner circumferential surface of the first attachment groove 15d.

The second cap 16 has a substantially disk shape. The second cap 16 has an annular second attachment groove 16a, which opens upward. The inner diameter and the outer diameter of the second attachment groove 16a correspond respectively to those of a cylinder body, which is formed by the filter element 13 and the covering member 14 similar to the first attachment groove 15d. In the second attachment groove 16a, the lower end of the filter element 13 is inserted. The lower end of the filter element 13 is fixed by adhesion to the inner circumferential surface of the second attachment groove 16a.

The internal space of the bowl 4 is partitioned by the oil mist filter 12 into an introduction chamber 21 and a discharge chamber 22. The introduction chamber 21 communicates with the introduction passage 10, and the discharge chamber 22 communicates with the discharge passage 11. The introduction passage 10, the communication hole 15c, the introduction chamber 21, the discharge chamber 22, and the discharge passage 11 constitute a gas passage. Through the gas passage, the inlet port 5 and the outlet port 6 communicate with each other. On the gas passage, the filter element 13 is located.

Compressed air flows from the inlet port 5 into the filter device 1. The compressed air contains liquid foreign matter such as oil mist and solid foreign matter such as dust. The compressed air flows through the introduction passage 1O and the communication hole 15c into the introduction chamber 21 in the bowl 4. The compressed air having flowed into the introduction chamber 21 passes through the filter element 13 into the discharge chamber 22. As the compressed air passes through the filter element 13, the foreign matter contained in the compressed air is removed by the filter element 13. The compressed air from which the foreign matter has been removed passes through the discharge passage 11 from the discharge chamber 22 and is discharged from the filter device 1 through the outlet port 6. The liquid foreign matter such as oil mist captured through the filter element 13 aggregates in the filter element 13. The aggregated liquid foreign matter precipitates by its own weight and is accumulated in the bowl 4. The covering member 14 prevents the foreign matter captured by the filter element 13 from being dispersed by the compressed air passing through the filter element 13. Further, the covering member 14 helps the captured liquid foreign matter to precipitate by its own weight. The foreign matter accumulated in the bowl 4 can be discharged to the outside manually or automatically. If the foreign matter is discharged from the bowl 4, the oil mist filter 12 can be used until it comes to the end of its service life owing to clogging or the like. The end of the service life of the oil mist filter 12 means a state where the difference between the internal pressure and the external pressure of the oil mist filter 12 comes to a predetermined value.

Next, the filter element 13 will be described.

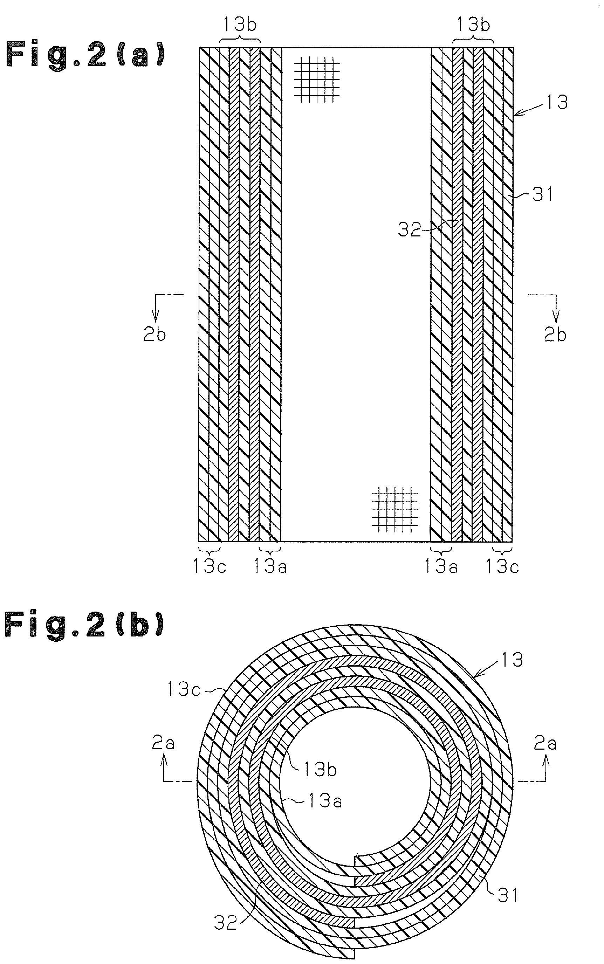

As shown in Figs. 2(a) and 2(b), the filter element 13 includes a plastic mesh-like member 31 and a filtration material 32 held by the mesh-like member 31. The mesh-like member 31 is formed by knitting polypropylene wires in a lattice shape. The wires have a diameter of 320 decitex (about 223 µm) and a density of 20 wires per 2.54 cm (1 inch). The mesh-like member 31 is wound spirally into a cylindrical shape. As the filtration material 32, filter paper made of the glass fiber is used. The filtration material 32 is wound together with the mesh-like member 31 spirally. The length of the filtration material 32 in the axial direction of the filter element 13 is set equal to that of the mesh-like member 31.

As shown in Fig. 2(b), when the filter element 13 is viewed radially outward from the inside the filter element 13, the mesh-like member 31 is independently wound by two turns to form a first reinforcement portion 13a. Subsequently, in condition where the filtration material 32 overlaps with the inner side of the mesh-like member 31, the mesh-like member 31 and the filtration material 32 are wound by two turns together to form a filtering portion 13b.

Moreover, the mesh-like member 31 is independently wound by two turns to form a second reinforcement portion 13c. In such a manner, the filter element 13 is formed by stacking the first reinforcement portion 13a, the filtering portion 13b, and the second reinforcement portion 13c. The filter element 13 has the first reinforcement portion 13a on the inside thereof and the second reinforcement portion 13c on the outside thereof. In such a manner, the filtration material 32 is sandwiched by the mesh-like member 31 in the radial direction of the filter element 13. Further, the portions of the mesh-like member 31 that overlap with each other in the radial direction of the filter element 13 are melted and bonded to each other, thereby keeping the filter element 13 in a cylindrical shape. On the other hand, the mesh-like member 31 and the filtration material 32 are not welded to each other.

The numbers of turns of the mesh-like member 31 wound at the first reinforcement portion 13a and the second reinforcement portion 13c respectively are set in accordance with the strength of the filter element 13. The numbers of turn of the filtration material 32 at the filtering portion 13b is set by taking into account the size of oil mist captured through the filter element 13, the thickness of the filtration material 32, and the diameter and the density of fibers constituting the filtration material 32.

Compressed air flows from the inside to the outside of the filter element 13. In this case, oil mist in the compressed air sticks to the fibers constituting the filtration material 32 by direct collision, inertial collision, contact attachment, diffusion or the like. In such a manner, inside the filter element 13, oil mist aggregates to be captured. Oil drops made of the aggregated oil mist precipitate in the filter element 13 by its own weight.

Next, a method for manufacturing the filter element 13 will be described.

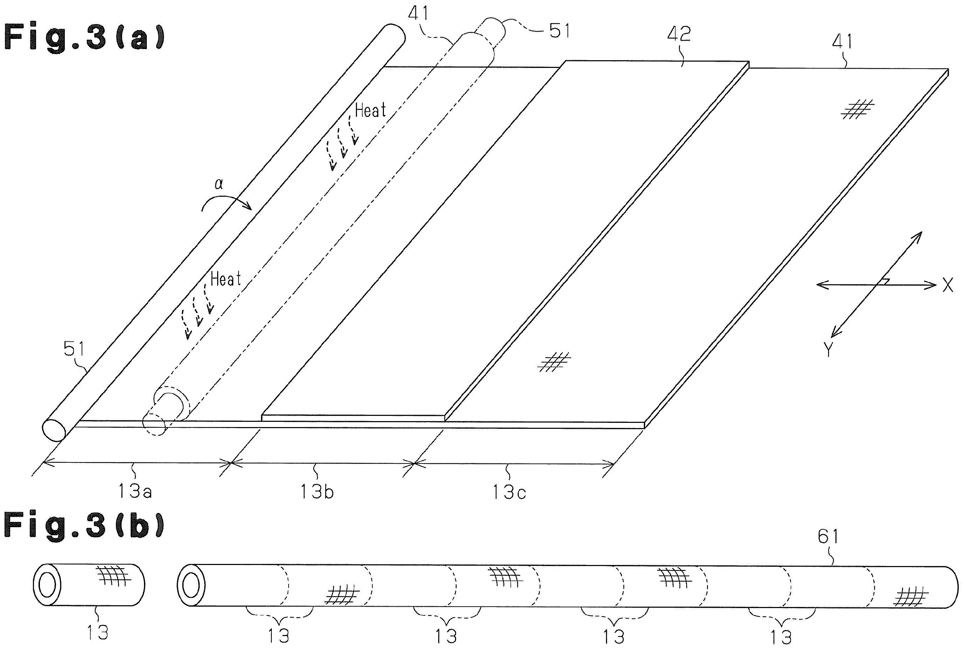

First, an arranging step is performed. In the arranging step, as shown in Fig. 3(a), a filtering material 42 is placed on a plastic mesh material 41. For the illustrative purposes, Fig. 3(a) exaggerates the thicknesses of the mesh material 41 and the filtering material 42.

The mesh material 41 is used to form the mesh-like member 31 of the filter element 13. The mesh material 41 is formed by knitting polypropylene wires in a lattice shape. The wires have a diameter of 320 decitex (about 223 µm) and a density of 20 wires per 2.54 cm (1 inch). The wires of the mesh material 41 have a two-layer structure having a core portion and an outer circumferential portion. The outer circumferential portion has a melting point lower than that of the core portion. The mesh material 41 has a square sheet shape. The length of the mesh material 41 in the first direction X is set such that the first reinforcement portion 13a, the filtering portion 13b, and the second reinforcement portion 13c can be wound. Moreover, the length of the mesh material 41 in the second direction Y is set to at least twice the axial length of the filter element 13. The second direction Y is orthogonal to the first direction X.

The filtering material 42 forms the filtration material 32 of the filter element 13. The filtering material 42 is formed of filter paper made of glass fiber. The filtering material 42 is also formed into a square sheet shape. The length of the filtering material 42 in the first direction Xis set such that the filtering portion 13b can be wound. The length of the filtering material 42 in the second direction Y is set equal to that of the mesh-like member 31. The filtering material 42 is provided on the mesh material 41 and is overlapped thereon at a position distant from the left end of Fig. 3(a) by a portion that corresponds to the first reinforcement portion 13a and distant from the right end of Fig. 3(a) by a portion that corresponds to the second reinforcement portion 13c. That is, the filtering material 42 is provided on the mesh material 41 and is overlapped at a portion that corresponds to the filtering portion 13b.

Next, a rolling-up step is performed. The mesh material 41 and the filtering material 42 overlapped with each other are rolled up spirally on the outer circumferential surface of a column-shaped spindle 51. The axial length of the spindle 51 is at least the length of the mesh material 41 in the second direction Y. The direction in which the mesh material 41 and the filtering material 42 are rolled up by the spindle 51 is aligned with the first direction X.

First, the spindle 51 is rotated in the direction of arrow a. Accordingly, as indicated by lines formed by a long dash alternating with two short dashes in Fig. 3(a), a portion of the mesh material 41 that corresponds to the first reinforcement portion 13a is rolled up on the outer circumferential surface of the spindle 51. The spindle 51 rotates twice until the spindle 51 reaches the end of the filtering material 42. As a result, on the outer circumferential surface of the spindle 51, the first reinforcement portion 13a is formed. In the rolling-up step, a heater (not shown) gives heat to the periphery of the spindle 51. The temperature of the heat from the heater is higher than the melting point of the outer circumferential portion of the wire constituting the mesh material 41 and lower than the melting point of the core portion of the wire. Therefore, after the mesh material 41 is rolled up by one turn on the outer circumferential surface of the spindle 51, a portion of the mesh material 41 that overlaps in the radial direction of the filter element 13 is melted and bonded. In such a manner, the mesh material 41 rolled up by the spindle 51 is kept in a cylindrical shape.

As the spindle 51 is rotated further, portions of the filtering material 42 and the mesh material 41 that correspond to the filtering portion 13b are rolled up on the outer circumferential surface of the first reinforcement portion 13a. The spindle 51 rotates twice until it rolls up all of the filtering material 42. In such a manner, the mesh material 41 and the filtering material 42 are wound by a plurality of turns on the outer circumferential surface of the first reinforcement portion 13a to form the filtering portion 13b as shown in Figs. 2(a) and 2(b). In the arranging step, the filtering material 42 is located with respect to the mesh material 41 to be sandwiched between the mesh material 41 and the spindle 51 when the filtering material 42 and the mesh material 41 are rolled up by the spindle 51. Accordingly, as the mesh material 41 is rolled up, naturally the filtering material 42 is also rolled up on the outer circumference of the spindle 51. The filtering material 42 is made of a glass filter paper. Therefore, the filtering material 42 is not melted and bonded to the polypropylene mesh material 41 by the heat from the heater.

As the spindle 51 is rotated further, a portion of the mesh material 41 that corresponds to the second reinforcement portion 13c is rolled up on the outer circumferential surface of the filtering portion 13b. The spindle 51 rotates twice until the spindle 51 reaches the right end of the mesh material 41 shown in Fig. 3(b). In such a manner, the mesh material 41 is wound by a plurality of turns on the outer circumferential surface of the filtering portion 13b to form the second reinforcement portion 13c as shown in Figs. 2(a) and 2(b). In this case, due to the heat from the heater, a portion of the mesh material 41 that is newly rolled up to overlap in the radial direction of the filter element 13 is melted and bonded. In such a manner, the mesh material 41 and the filtering material 42, which are rolled up by the spindle 51, are kept in a cylindrical shape. Accordingly, on the outer circumferential surface of the spindle 51, such a cylindrical rolled-up member 61 as shown in Fig. 3(b) is formed.

Next, a cutting step is performed. The rolled-up member 61 is cut axially into a plurality of portions. In the cutting step, the rolled-up member 61 is sequentially cut off from the one end in the axial direction for each axial length of the filterelement 13. Accordingly, from each of the rolled-up members 61, a plurality of the filter elements 13 each having a predetermined length is formed. Fig. 3(b) shows the cutting position with a broken line. The covering member 14 is fitted to the external side of the filter element 13, while the first cap 15 is attached to one end and the second cap 16 is attached to the other end of the filter element 13 and the covering member 14. In such a manner, the oil mist filter 12 is finished to be made.

As described above, the present embodiment has the following operation and advantages.
(1) The filter element 13 is formed in a tubular shape by spirally winding the plastic mesh-like member 31 and the filtration material 32 formed of the glass fiber filter paper. Accordingly, the filter element 13 has a smaller number of components. Further, when manufacturing the filter element 13, in the rolling-up step, the tubular rolled-up member 61 is formed by spirally rolling up the plastic mesh material 41 and the filtering material 42 together. In the cutting step, one rolled-up member 61 is cut into a plurality of the filter elements 13. Therefore, it is possible to easily manufacture the filter elements 13, thereby improving productivity and inhibiting a rise in manufacturing costs. Further, it is also possible to inhibit a rise in costs of manufacturing the filter device 1 including the filter element 13. Moreover, by cutting the rolled-up member 61 for each length of the filter element 13, the axial lengths of the mesh-like member 31 and the filtration material 32 are aligned, so that in contrast to the conventional method, it is unnecessary to carve out the mesh material 41 and the filtering material 42 from a sheet material. This facilitates the management of the sizes of those materials. Moreover, since the mesh material 41 (mesh-like member 31) is made of plastic, the filtering material 42 (filtration material 32) is prevented from being damaged due to contact with the filtering material 42 (filtration material 32) and the mesh material 41 (mesh-like member 31). Therefore, the necessity of a member (non-woven fabric or the like) to prevent the filtering material 42 (filtration material 32) from being damaged is eliminated.
(2) The mesh-like member 31 serves to ensure the strength of the filter element 13. This eliminates the necessity of winding non-woven fabric thickly in order to ensure strength. Accordingly, oil mist captured by the filter element 13 is permitted to precipitate smoothly by its own weight. Therefore, it is also possible to ensure the strength of the filter element 13 while inhibiting the flow of the compressed air from being prevented. Further, the filter device 1 including the filter element 13 enables introduction and discharge of the compressed air.
(3) In the rolling-up step, after the mesh material 41 is independently wound by a plurality of turns to be rolled up, the filtering material 42 is rolled up together with the mesh material 41. Accordingly, at a position radially inward of the rolled-up member 61, the mesh material 41 serves to protect the filtering material 42 and to stabilize the position of the filtering material 42. That is, at a position radially inward of the filtration material 32 of the filter element 13, the mesh-like member 31 is independently wound by a plurality of turns, so that the mesh-like member 31 serves to protect the filtration material 32 and to stabilize the position of the filtration material 32. Further, it is possible to ensure the strength of the filter element 13 without using the conventional reinforcement cylinder. Moreover, by adjusting the number of turns of the mesh-like member 31 at a position radially inward of the filtration material 32, the strength of the filter element 13 can be adjusted easily.
(4) In the rolling-up step, after the mesh material 41 and the filtering material 42 are rolled up together, the mesh material 41 is independently rolled up by a plurality of turns. Accordingly, at a radially outward position of the rolled-up member 61, the mesh material 41 serves to protect the filtering material 42 and to stabilize the position of the filtering material 42. That is, at a position radially outward of the filtration material 32 of the filter element 13, the mesh-like member 31 is independently wound by a plurality of turns, so that the mesh-like member 31 serves to protect the filtration material 32 and to stabilize the position of the filtration material 32. Further, it is possible to ensure the strength of the filter element 13 without using the conventional reinforcement cylinder. Moreover, by adjusting the number of turns of the mesh-like member 31 at a radially outward position of the filtration material 32, the strength of the filter element 13 can be adjusted easily.
(5) In the rolling-up step, portions of the mesh material 41 that overlap with each other in the radial direction of the filter element 13 are melted and bonded to each other.

According to the present invention, the mesh material 41 is made of plastic, so that it is possible to easily melt and bond the portions of the mesh material 41 that overlap with each other in the radial direction of the filter element 13 to each other. Therefore, it is possible to keep the mesh material 41 and the filtering material 42 rolled up by the spindle 51 in a cylindrical shape easily. Further, the necessity of a member or an adhesive agent to keep the mesh material 41 and the filtering material 42 in a cylindrical shape is eliminated, thereby enabling reduction in the manufacturing costs.
(6) Since the strength of the filter element 13 is ensured by the mesh-like member 31, the necessity of the conventional metallic reinforcement cylinder is eliminated. Therefore, it is possible to reduce the weight of the filter element 13, hence, the weights of the oil mist filter 12 and the filter device 1. Further, the metallic reinforcement cylinder is rendered unnecessary along with the step of welding during the manufacturing of the filter element 13, thereby further facilitating the manufacturing of the filter element 13.
(7) Most of the components of the oil mist filter 12 are made of plastic and, therefore, can be segregated and discarded easily.

The embodiment of the present invention may be changed as follows.

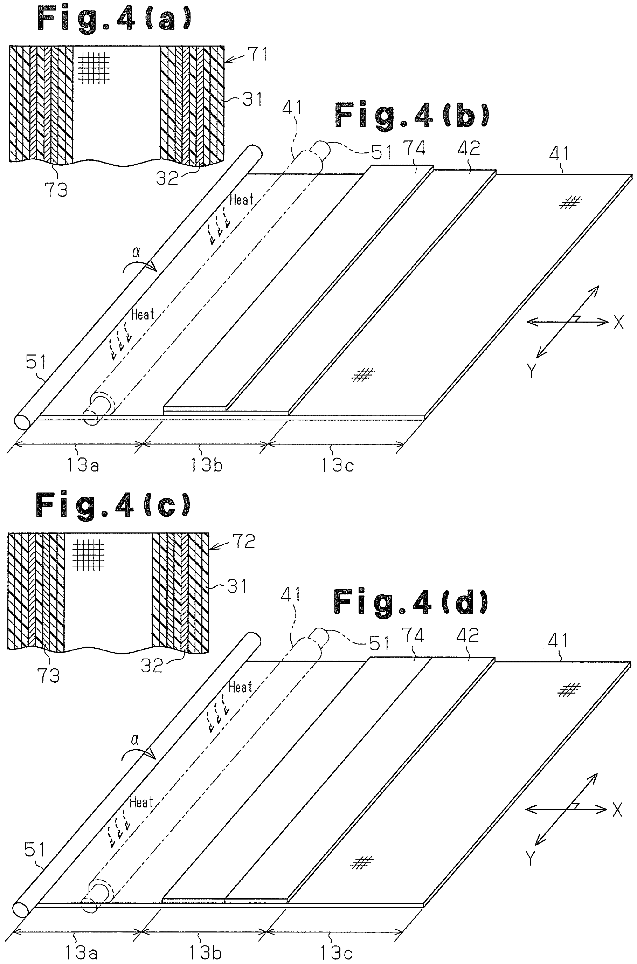

Like filter elements 71 and 72 shown in Figs. 4(a) and 4(c), a pre-filtration material 73, which has a coarser mesh than the filtration material 32, may be provided in addition to the mesh-like member 31 and the filtration material 32. The pre-filtration material 73 is made of, for example, a non-woven fabric and capable of capturing solid foreign matter with a size of 3 to 5 µm contained in passing gas. In the arranging step, as shown in Fig. 4(b), a square-shaped pre-filtering material 74 is placed to overlap with the filtering material 42 on the mesh material

Alternatively, as shown in Fig. 4(d), the pre-filtering material 74 and the filtering material 42 are placed on the mesh material 41 in that order in a direction in which the mesh material 41 is rolled up. Next, in the rolling-up step, the filtering material 42 and the pre-filtering material 74 are rolled up spirally together with the mesh material 41 to form a tubular rolled-up member. In the cutting step, the rolled-up member is cut for each length of the filter element into a plurality of the filter elements 71 and 72. In the filter elements 71 and 72, the pre-filtration material 73 is located at a position radially inward of the filtration material 32. In the arranging step shown in Fig. 4(b), the filter element 71 shown in Fig. 4(a) is formed. In the arranging step shown in Fig. 4(d), the filter element 72 shown in Fig. 4(c) is formed.

Even in this case, the rolled up member can be formed only by one rolling-up step, that is, only by rolling up the mesh material 41 from one end to the other end thereof, and only by cutting the rolled up member, a plurality of the filter elements 71 and 72 can be formed. Accordingly, even in the case of forming the filter elements 71 and 72 having the pre-filtration material 73 in addition to the filtration material 32, the filter elements 71 and 72 can be manufactured easily. Further, when gas passes through the filter elements 71 and 72 from their inside to outside, foreign matter larger than oil mist is captured by the coarse-meshed pre- filtration material 73 at a radially inward position and oil mist is captured by the fine-meshed filtration material 32 at radially outward position. Therefore, the filtration material 32 in the filter elements 71 and 72 are inhibited from being clogged. Further, since the pre-filtration material 73 functions as a pre-filter configured to remove foreign matter larger than oil mist, the number of the filters can be reduced as compared to a filter device in which a filter to remove foreign matter larger than oil mist and an oil mist filter are located in series. Therefore, the space of the filter device can be saved. Further, it is also possible to reduce the costs for manufacturing the filter elements 71 and 72 as well as the filter device. The filter elements 71 and 72 having the pre-filtration material 73 can be improved in strength by increasing the radial thickness of the pre-filtration material 73.

In the rolling-up step, as long as the rolled up mesh material 41 and filtering material 42 can be kept in a cylindrical shape, the portions of the mesh material 41 that overlap in the radial direction of the filter element 13 need not all be melted and bonded but need to be done partially. For example, only the terminal portion of the rolled up mesh material 41 may be melted and bonded.

On the first reinforcement portion 13a formed at a position radially inward of the filter element 13, the mesh-like member 31 only needs to be independently wound by at least one turn. In this case, the same operation and advantage as those of (2) of the above embodiment are obtained. Further, also on the second reinforcement portion 13c formed at a position radially outward of the filter element 13, the mesh-like member 31 only needs to be independently wound by at least one turn. In this case, the same operation and advantage as those of (3) of the above embodiment are obtained. Further, the number of turns of the mesh material 41 at a position radially inward or outward of the filtering material 42 of the rolled-up member 61 is determined in accordance with the numbers of turns of the first and second reinforcement portions 13a and 13c of the filter element 13.

Although the above embodiment has ensured the radial thickness of the filtration material 32 by winding the one sheet of the filtration material 32 together with the mesh-like member 31 by a plurality of number of turns, alternatively the radial thickness of the filtration material 32 may be ensured by spirally winding a plurality of the overlapped filtration material 32 together with the mesh-like member 31.

In the above embodiment the rolled-up member 61 is sequentially cut for each axial length of the filter element 13 from one end thereof. Alternatively the rolled-up member 61 may be cut at a plurality of cutting positions at a time to form a plurality of the filter elements 13.

The mesh-like member 31 and the mesh material 41 may be made of any plastic other than polypropylene, for example, cellulose or polyester-based plastic.

In the above embodiment, the covering member 14 fitted about the filter element 13 may be omitted.

A reinforcement member may be provided to the inner or outer side of the filter element 13. For example, as the reinforcement member, a coil spring may be inserted into the filter element 13.

The filter element 13 need not be cylindrical as long it is tubular.

## Claims

1. A filter element for capturing oil mist contained in gas, the filter element comprising a plastic mesh-like member and a filtration material for capturing oil mist in gas passing through the filter element, the filter element being formed in a tubular shape by spirally winding the mesh-like member and the filtration material together, the filter element being **characterized by:**
a first reinforcement portion formed by independently winding the mesh-like member by at least one turn at a position radially inward of the filtration material; and
a second reinforcement portion formed by independently winding the mesh-like member by at least one turn at a position radially outward of the filtration material;
wherein the parts of the mesh material that overlap with each other in the radial direction of the filter element are welded to each other.

2. The filter element according to claim 1, **characterized by** a pre-filtration material, which has a coarser mesh than the filtration material and captures foreign matter in the gas,
wherein the pre-filtration material is located at a position radially inward of the filtration material.

3. A filter device **characterized by:**
a housing, which has a gas passage for discharging gas that has been introduced to the housing out of the housing; and
the filter element according to claim 1 or 2, wherein the filter element is located on the gas passage of the housing and captures oil mist contained in the gas.

4. A method for manufacturing the filter element according to claim 1 or 2, the method being **characterized by:**
a step of rolling up a plastic mesh material and a filtering material located on the mesh material spirally together to form a tubular rolled-up member, wherein in the rolling-up step, after the mesh material is independently rolled up by at least one turn, the mesh material and the filtering material are rolled up together, in the rolling-up step, after the mesh material and the filtering material are rolled up together, the mesh material is independently rolled up by at least one turn, and in the rolling-up step, the parts of the mesh material that overlap with each other in the radial direction of the filter element are welded to each other; and
a step of cutting the rolled-up member for each axial length of the filter element to form a plurality of the filter elements from the rolled-up member.

5. The method according to claim 4, the method being **characterized by:**
a step of arranging the filtering material on a plastic mesh material and then arranging a pre-filtering material on the filtering material, the pre-filtering material has a coarser mesh than the filtration material and captures foreign matter in the gas, wherein the filtering material and the pre-filtering material are rolled up together with the mesh material.

6. The method according to claim 4, the method being **characterized by:**
a step of arranging a pre-filtering material and the filtering material in that order on the plastic mesh material in a roll-up direction of the mesh material, the pre-filtering material has a coarser mesh than the filtration material and captures foreign matter in the gas, wherein the filtering material and the pre-filtering material are rolled up together with the mesh material.

## Patentansprüche

1. Filterelement zum Abscheiden von Ölnebel, der in dem Gas enthalten ist, wobei das Filterelement ein maschenförmiges Element aus Kunststoff und ein Filtrierungsmaterial zum Abscheiden von Ölnebel aus dem durch das Filterelement hindurchströmenden Gas umfasst, wobei das Filterelement rohrförmig gebildet ist, indem das maschenförmige Element und das Filtrierungsmaterial spiralförmig zusammengewickelt sind, wobei das Filterelement **gekennzeichnet ist durch**:
einen ersten Verstärkungsabschnitt, der gebildet ist, indem das maschenförmige Element **durch** mindestens eine Drehung an einer Position, die sich radial innen von dem Filtrierungsmaterial befindet, unabhängig gewickelt ist; und
einen zweiten Verstärkungsabschnitt, der gebildet ist, indem das maschenförmige Element **durch** mindestens eine Drehung an einer Position, die sich radial außen von dem Filtrierungsmaterial befindet, unabhängig gewickelt ist;
wobei die Teile des Maschenmaterials, die sich in der radialen Richtung des Filterelements gegenseitig überlappen, miteinander verschweißt sind.

2. Filterelement nach Anspruch 1, **gekennzeichnet durch** ein Vorfiltrierungsmaterial, das eine gröbere Maschenweite als das Filtrierungsmaterial aufweist und Fremdkörper in dem Gas abscheidet,
wobei das Vorfiltrierungsmaterial an einer Position, die sich radial innen von dem Filtrierungsmaterial befindet, angeordnet ist.

3. Filtervorrichtung **gekennzeichnet durch**:
ein Gehäuse, das einen Gasdurchlassbereich aufweist, um Gas, das in das Gehäuse eingeführt worden ist, aus dem Gehäuse zu entladen; und
das Filterelement nach Anspruch 1 oder 2, wobei das Filterelement auf dem Gasdurchlassbereich des Gehäuses angeordnet ist und Ölnebel, der in dem Gas enthalten ist, abscheidet.

4. Verfahren zum Herstellen des Filterelements nach Anspruch 1 oder 2, wobei das Verfahren **gekennzeichnet ist durch**:
einen Schritt, ein Maschenmaterial aus Kunststoff und ein Filtrierungsmaterial, das auf dem Maschenmaterial angeordnet ist, spiralförmig zusammen aufzurollen, um ein rohrförmig aufgerolltes Element zu bilden, wobei bei dem Schritt des Aufrollens, nachdem das Maschenmaterial **durch** mindestens eine Drehung unabhängig aufgerollt worden ist, das Maschenmaterial und das Filtrierungsmaterial zusammen aufgerollt werden, wobei bei dem Schritt des Aufrollens, nachdem das Maschenmaterial und das Filtrierungsmaterial zusammen aufgerollt worden sind, das Maschenmaterial durch mindestens eine Drehung unabhängig aufgerollt wird, und wobei in dem Schritt des Aufrollens die Teile des Maschenmaterials, die sich in der radialen Richtung des Filterelements gegenseitig überlappen, miteinander verschweißt werden; und
einen Schritt des Schneidens des aufgerollten Elements für jede axiale Länge des Filterelements, um eine Vielzahl der Filterelemente aus dem aufgerollten Element zu bilden.

5. Verfahren nach Anspruch 4, wobei das Verfahren **gekennzeichnet ist durch**:
einen Schritt des Anordnens des Filtrierungsmaterials auf einem Maschenmaterial aus Kunststoff und dann eines Anordnens eines Vorfiltrierungsmaterials auf dem Filtrierungsmaterial, wobei das Vorfiltrierungsmaterial eine gröbere Maschenweite als das Filtrierungsmaterial aufweist und Fremdkörper in dem Gas abscheidet, wobei das Filtrierungsmaterial und das Vorfiltrierungsmaterial zusammen mit dem Maschenmaterial aufgerollt werden.

6. Verfahren nach Anspruch 4, wobei das Verfahren **gekennzeichnet ist durch**:
einen Schritt des Anordnens eines Vorfiltrierungsmaterials und des Filtrierungsmaterials in dieser Reihenfolge auf dem Maschenmaterial aus Kunststoff in einer Aufrollrichtung des Maschenmaterials, wobei das Vorfiltrierungsmaterial eine gröbere Maschenweite als das Filtrierungsmaterial aufweist und Fremdkörper in dem Gas abscheidet, wobei das Filtrierungsmaterial und das Vorfiltrierungsmaterial zusammen mit dem Maschenmaterial aufgerollt werden.

## Revendications

1. Élément de filtre pour capturer un brouillard d'huile contenu dans un gaz, l'élément de filtre comprenant un élément de type maille en plastique et un matériau de filtration pour capturer le brouillard d'huile dans le gaz passant à travers l'élément de filtre, l'élément de filtre étant formé en une forme tubulaire en enroulant en spirale l'élément de type maille et le matériau de filtration conjointement, l'élément de filtre étant **caractérisé par** :
une première portion de renforcement formée en enroulant indépendamment l'élément de type maille par au moins un tour à une position radialement vers l'intérieur du matériau de filtration ; et
une seconde portion de renforcement formée en enroulant indépendamment l'élément de type maille par au moins un tour à une position radialement vers l'extérieur du matériau de filtration ;
dans lequel les parties du matériau de maille qui se superposent l'une l'autre dans la direction radiale de l'élément de filtre sont soudées l'une à l'autre.

2. Élément de filtre selon la revendication 1, **caractérisée par** un matériau de pré filtration, qui a une maille plus grossière que le matériau de filtration et capture la matière étrangère dans le gaz,
dans lequel le matériau de pré filtration est situé à une position radialement vers l'intérieur du matériau de fixation.

3. Dispositif de filtre **caractérisé par** :
un boîtier, qui a un passage de gaz pour évacuer le gaz introduit dans le boîtier à partir de l'extérieur du boîtier ; et
l'élément de filtre selon la revendication 1 ou 2, dans lequel l'élément de filtre est situé sur le passage de gaz du boîtier et capture le brouillard d'huile contenu dans le gaz.

4. Procédé de fabrication de l'élément de filtre selon la revendication 1 ou 2, le procédé dans **caractérisé par** :
une étape d'enroulement d'un matériau de maille plastique et d'un matériau de filtration situé sur le matériau de maille en spirale conjointement afin de former un élément enroulé tubulaire, dans lequel à l'étape d'enroulement, après que le matériau de maille a été enroulé indépendamment par au moins un tour, le matériau de maille et le matériau de filtration sont enroulés conjointement pendant l'étape d'enroulement, après que le matériau de maille et le matériau de filtration ont été enroulés conjointement, le matériau de maille est enroulé indépendamment par au moins un tour, et pendant l'étape enroulement, les parties du matériau de maille qui se superposent l'une l'autre dans la direction radiale de l'élément de filtre sont soudées l'une à l'autre ; et
une étape de découpe de l'élément enroulé pour chaque longueur axiale de filtre afin de former une pluralité des éléments de filtre à partir de l'élément enroulé.

5. Procédé selon la revendication 4, le procédé étant **caractérisé par** :
une étape de disposition du matériau de filtration sur un matériau de maille plastique et ensuite de dispositions d'un matériau de pré filtration sur le matériau de fixation, le matériau de pré filtration a une maille plus grossière que le matériau de filtration et capture de la matière étrangère dans le gaz, dans lequel le matériau de filtration et le matériau de filtration sont enroulés conjointement avec le matériau de maille.

6. Procédé selon la revendication 4, le procédé étant **caractérisé par** :
une étape de disposition d'un matériau de pré filtration et du matériau de filtration dans cet ordre sur le matériau de maille plastique dans une direction d'enroulement du matériau de maille, le matériau de récupération a une maille plus grossière que le matériau de filtration et capture de la matière étrangère dans le gaz, dans lequel le matériau de filtration et le matériau de pré filtration sont enroulés conjointement avec le matériau de maille.
